# EUROPÄISCHE PATENTANMELDUNG

(11) **EP 3 373 063 A1**
(43) Veröffentlichungstag der Anmeldung: **12.09.2018**
(21) Anmeldenummer: 18157297.5
(22) Anmeldetag: 27.05.2014
(51) Int. Cl.: G02B 21/16, G02B 21/36, G02B 27/58, G01N 21/64, G06T 7/536, G06T 7/77

(54) **LUMINESZENZMIKROSKOPIE**

(30) Priorität: 28.05.2013 DE 102013009042
(62) Teilanmeldung aus: 14730094.1
(71) Anmelder: Carl Zeiss Microscopy GmbH, 07745 Jena (DE)
(72) Erfinder: ENGEL, Jörg, 07570 Weida (DE); KALKBRENNER, Thomas, 07745 Jena (DE); BATHE, Wolfgang, 07743 Jena (DE)
(74) Vertreter: Loritz, Rainer

(57) **Zusammenfassung**

Die Erfindung betrifft ein Verfahren zur hochauflösenden Lumineszenzmikroskopie einer mit Markierungsmolekülen markierten Probe und ein Lumineszenzmikroskop zur Durchführung des Verfahrens, wobei die Markierungsmoleküle zur Abgabe von Lumineszenzstrahlung anregbar sind. Das Verfahren zur Lumineszenzmikroskopie umfasst ein Anregen mittels eines quer zur Tiefenrichtung liegenden Lichtblatts oder mittels zweier sich in Tiefenrichtung überlappender Lichtblätter und Abbilden von Markierungsmolekülen, ein Übertragen eines Auslösezeitpunkts und einer Position der Probe. Ein optisches Aufnahmegerät 1 bildet die Markierungsmoleküle in einem Fangbereich ab und überträgt Daten der Abbildung an eine Bildfangschaltung 2. Das Aufnahmegerät 1 überträgt einen Zeitpunkt der Abbildung an einen Signalformer 3 als Auslösezeitpunkt. Im Anschluss wird der Auslösezeitpunkt an einen Datenaufnehmer 4 übertragen. Der Datenaufnehmer 4 generiert eine Position der Probe zum Auslösezeitpunkt und überträgt diese an die Bildfangschaltung 2, welche die Position der Probe in Tiefenrichtung mit den Daten des Abbildens eines Frames verknüpft damit ein drei dimensionales Schichtbild der Probe erstellbar ist.

## Beschreibung

Die Erfindung betrifft ein Verfahren zur hochauflösenden Lumineszenzmikroskopie einer mit Markierungsmolekülen markierten Probe, wobei die Markierungsmolekle zur Abgabe von Lumineszenzstrahlung anregbar sind sowie ein Lumineszenzmikroskop..

Zur Untersuchung von biologischen Präparaten werden in der Lumineszenzmikroskopie bestimmte Farbstoffe beispielsweise Phosphore oder Fluorophore zur spezifischen Markierung von Proben wie Zellteile verwendet. Die Probe wird mit Anregungsstrahlung darstellender Beleuchtungsstrahlung beleuchtet und die dadurch angeregte Lumineszenzstrahlung mit Detektoren erfasst. Beispielsweise sind dazu im Mikroskop ein Strahlteiler und Blockfilter vorgesehen, die die Lumineszenzstrahlung von der Anregungsstrahlung abspalten und eine getrennte Beobachtung ermöglichen. Durch dieses Vorgehen ist die Darstellung einzelner, verschieden gefärbter Zellteile im Mikroskop möglich. Bei Mehrfachlumineszenz werden mehrere Teile eines Präparates gleichzeitig mit verschiedenen, sich spezifisch an unterschiedliche Strukturen des Präparates anlagernden Farbstoffen eingefärbt werden. Weiterhin kann man Proben vermessen, die ohne Farbstoffzugabe lumineszieren. Hierbei wird Lumineszenz als Oberbegriff für Phosphoreszenz und Fluoreszenz verstanden.

So ist bekannt mittels optischer Strahlung aktivierbare Markierungsmoleküle oder eine Markierungssubstanz zu verwenden. Diese Markierungsmoleküle sind nur im aktivierten Zustand zur Abgabe von bestimmter Lumineszenzstrahlung anregbar. Nicht aktivierte Markierungsmoleküle senden auch nach Einstrahlung von Anregungsstrahlung keine oder zumindest keine merkliche Lumineszenzstrahlung ab. Die Aktivierungsstrahlung bringt die Markierungssubstanz also in einen Zustand, in dem sie zur Lumineszenz anregbar ist. Auch andere Aktivierung, z.B. thermischer Art, sind möglich. Die Aktivierungsstrahlung wird dabei so angewandt, dass zumindest ein gewisser Anteil der aktivierten Markierungsmoleküle von benachbarten aktivierten Molekülen beabstandet sind. Nach Aufnahme der Lumineszenzstrahlung wird für diese isolierten Moleküle dann das Zentrum deren auflösungsbegrenzt bedingten Strahlungsverteilung ermittelt und daraus rechnerisch die Lage der Moleküle mit höher Genauigkeit bestimmt.

In der Lumineszenzmikroskopie erfolgt eine Ortsbestimmung mit optischen Aufnahmegeräten beispielsweise hochempfindlichen Kameras mit einer Genauigkeit bis in den Nanometerbereich. Für ein Lokalisieren der Markierungsmoleküle sind verschiedene Bildauswertungsmethoden bekannt. Eine hohe Lokalisierungsgenauigkeit wird aber lediglich lateral erreicht, also in einer Ebene, die der Bildebene des Aufnahmegeräts zugeordnet ist. Die Verfahren sind also in dieser Hinsicht auf eine zweidimensionale Probenanalyse beschränkt, wobei die Ebene beispielsweise xy-Ebene genannt wird.

Zur Lokalisierung lumineszierender Markierungsmoleküle in der dritten Dimension, in der Tiefenrichtung bezogen auf die Abbildung der Probe beispielsweise mit z bezeichnet, sind aus dem Stand der Technik Ansätze bekannt. Nach der Bildaufnahme einer Schicht, dies wird auch Frame genannt, wird hierbei die Probe oder ein Objektiv des Aufnahmegeräts in der Tiefenrichtung verschoben um ein weiteres Bild der nächsten Schicht aufzunehmen. Die Bildaufnahmen werden anschliessend zu einem alle Schichten umfassenden Schichtbild zusammengefügt. Zum Erstellen eines Schichtbilds muss jede Bildaufnahme mit der Position der Probe in Tiefenrichtung verknüpft werden.

Dabei darf ein Abstand in Tiefenrichtung von Bildaufnahme zu Bildaufnahme nicht grösser sein als eine Tiefenschärfe des Objektives oder auch Fangbereich genannt, da sonst Lücken im Schichtbild entstehen. Daher müssen auf Grund des Lokalisieren der Markierungsmoleküle eine grosse Anzahl von Bildern aufgenommen werden um ein qualitativ hochwertiges Schichtbild zu erhalten.

Bei der Verwendung von Markierungsmolekülen entsteht dabei ein zusätzliches Problem. Die Anregungsstrahlung oder Aktivierungsstrahlung ist nicht auf den Bildbereich eines einzelnen Bildes beschränkt, das heisst es werden auch Markierungsmoleküle oberhalb und unterhalb des Bildbereichs angeregt oder aktiviert. Dadurch stehen diese Markierungsmoleküle für eine weitere Bildaufnahme in einer höheren oder tieferen Schicht nicht mehr zur Verfügung. Die Probe wird durch die Anregungsstrahlung oder Aktivierungsstrahlung geblichen.

Um diesen Effekt zu reduzieren wurde von Mlodzianoski et al., Optics Express 19, 15009 (2011) vorgeschlagen, während eines Messvorgangs von vielen einzelnen Bildaufnahmen die Probe in der Tiefenrichtung zu verschieben, wobei die Probe während der Messung mit Anregungsstrahlung oder Aktivierungsstrahlung bestrahlt wird. Dabei wird das Bleichen der Probe auf alle Schichten des gesamten Messvorgangs verteilt.

Die Bestimmung der Position der Probe in Tiefenrichtung für jede einzelne Bildaufnahme stellt dabei ein wesentliches Problem dar, da eine Gesamtdauer der Messung auf Grund des Bleichens der Probe nicht durch die Positionsbestimmung verlängert werden darf. Darüber hinaus müssen beliebige Positionen in einer beliebigen Folge verwendbar sein um eine bestimmte Signalform der Position in Tiefenrichtung zu erhalten. Daher liegt der vorliegenden Erfindung die Aufgabenstellung zugrunde ein Verfahren bereitzustellen, wobei eine Bildaufnahme einer Position der Probe mit einem beliebigen Positionsverlauf in Tiefenrichtung ohne Verzögerung möglich ist.

Die Erfindung löst die Aufgabe durch ein Verfahren zur Lumineszenzmikroskopie umfassend ein Anregen und Abbilden von Markierungsmolekülen, ein Übertragen eines Auslösezeitpunkts und einer Position einer Probe zum Auslösezeitpunkt gemäss Anspruch 1. Weitere vorteilhafte Ausgestaltungen ergeben sich aus den Unteransprüchen.

Bei dem Verfahren zur hochauflösenden Lumineszenzmikroskopie einer Probe werden Markierungsmoleküle beispielsweise synthetische Farbstoffe oder fluoreszierende Proteine eingesetzt, welche zur Abgabe von Lumineszenzstrahlung anregbar sind oder selbst lumineszierend sind. Zur Bildaufnahme einer Schicht der Probe wird zuerst eine Teilmenge der in der Probe vorhandenen Markierungsmoleküle zur Abgabe von Lumineszenzstrahlung angeregt, falls diese nicht selbstlumineszierend sind. Die Anregung kann dabei beispielsweise optisch mit Hilfe eines Lasers oder thermisch erfolgen. Dabei ist zu beachten, dass die Bereiche zumindest teilweise hintereinander liegen und sich teilweise überlappen und dass die Bereiche hinsichtlich der Detektion unterscheidbar bestrahlt werden.

Die Strahlung kann in Form eines quer zur Tiefenrichtung liegenden Lichtblattes eingestrahlt werden. Eine Verschiebung der Probe in Tiefenrichtung ist dabei bevorzugt geringer als die halbe Dicke des Lichtblattes. Alternativ ist es auch möglich, zwei Lichtblätter einzusetzen, die so zueinander liegen, dass sie in Tiefenrichtung überlappen. Ein Lichtblatt ist dabei die Beleuchtung, welche unter einem Winkel zur Detektionsachse beispielsweise in Tiefenrichtung eingestrahlt wird. In der Regel umfasst der Beleuchtungsbereich dabei den Bereich einer Detektionsebene, welcher durch eine Detektionsoptik vorgegeben wird. Die Beleuchtung kann dabei sowohl parallel, z. B. mit Hilfe einer anamorphotischen Optik, als auch sequentiell durch Abrastern mit Hilfe eines Anregungsstrahls erfolgen. Auch die Kombination aus beiden Varianten ist möglich.

In einem nächsten Schritt werden die Markierungsmoleküle in einem Fangbereich mittels eines optischen Aufnahmegeräts beispielsweise einer Kamera abgebildet und die Abbildung an eine Bildfangschaltung oder auch Framegrabber genannt übertragen.

Der anschliessende Verfahrensschritt umfasst Übertragen eines Zeitpunkts des Abbildens der Markierungsmoleküle als Auslösezeitpunkt des optischen Aufnahmegeräts an einen Signalformer oder auch Signalshaper genannt. Der Signalformer speichert den Auslösezeitpunkt zur späteren Weiterverarbeitung und Nutzung. Dabei führt der Signalformer eventuell notwendige Aufbereitungen des Auslösezeitpunkts zu Daten oder einem Datenformat durch.

Im Folgenden wird der Auslösezeitpunkt an einen Datenaufnehmer übertragen. wobei dieser den Auslösezeitpunkt zur weiteren Verarbeitung speichert. Im nächsten Schritt wird eine Position der Probe in Tiefenrichtung oder z- Richtung in Bezug auf ein Objektiv des optischen Aufnahmegeräts an den Datenaufnehmer übertragen.

In einer vorteilhaften Ausgestaltung des Verfahrens wird vor dem Übertragen der Position der Probe in Tiefenrichtung ein Signal zur Vorgabe einer vertikalen Position der Probe mittels eines Signalgenerators generiert und eine bestimmte Position der Probe in Bezug auf das Objektiv angesteuert. Dabei kann sowohl die Probe oder das Objektiv verschoben werden.

Eine weitere vorteilhafte Ausgestaltung der Erfindung sieht vor, dass die Markierungsmoleküle derart aktivierbar sind, dass sie erst nach erfolgter Aktivierung zur Abgabe von Lumineszenzstrahlung anregbar sind, und eine Bildaufnahme weiter ein Aktivieren einer Teilmenge der in der Probe vorhandenen Markierungsmoleküle zur Abgabe von Lumineszenzstrahlung aufweist.

In einer besonders vorteilhaften Ausführungsform der Erfindung gibt der Signalformer ein Steuersignal an den Signalgenerator zum Anfahren einer vertikalen Position. Das Steuersignal ist dabei vorzugsweise synchronisiert mit dem Abbilden der Markierungsmoleküle.

Eine weitere Ausführungsform sieht vor, dass der Datenaufnehmer mittels des Auslösesignals die Position der Probe zum Zeitpunkt des Abbildens der Markierungsmoleküle bestimmt und an die Bildfangschaltung überträgt, welche die Abbildung mit der Position zusammenführt oder verknüpft.

In einer weiteren vorteilhaften Ausführung der Erfindung wird das Auslösesignal als Kontrollsignal zur Anregung und/oder Aktivierung der Markierungsmoleküle verwendet. Dies kann insbesondere zu einem Ausblenden, auch Blanking genannt, eines Beleuchtungsstrahlengangs beispielsweise eines Lasers verwendet werden. In einer Ausgestaltung hierzu erfolgt das Ausblenden des Beleuchtungsstrahlengangs während einer Auslesezeit beispielsweise einer Totzeit des optischen Aufnahmegeräts.

Eine Ausführungsform der Erfindung sieht vor, dass ein Stellelement die vertikale Position der Probe ansteuert und die Position der Probe zum Zeitpunkt des Abbildens der Markierungsmoleküle an den Datenaufnehmer überträgt. Dabei ist das Stellelement bevorzugt als ein Piezoelektrisches Stellelement ausgebildet. In einer vorteilhaften Ausgestaltung hierzu ist weiter vorgesehen, dass das Ansteuern einer Position der Probe während einer Auslesezeit oder Totzeit des optischen Aufnahmegeräts erfolgt. In einer weiteren Ausgestaltung positioniert das Stellelement entweder die Probe oder das Objektiv des optischen Aufnahmegeräts. Wichtig dabei ist die relativ Position der Probe zum Objektiv. In einer besonders vorteilhaften Ausgestaltung hierzu steuert das Stellelement eine beliebige Positionsfolge, auch z-Signalform genannt, an. Die Positionierung kann dabei kontinuierlich erfolgen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Weitere Merkmale, Einzelheiten und Vorteile der Erfindung ergeben sich aus dem Wortlaut der Anspüche sowie aus der Beschreibung von Ausführungsbeispielen anhand der Figuren.

Die Erfindung wird in weiteren Einzelheiten anhand des nachfolgenden Textes mit Bezug auf bevorzugte Ausführungsbeispiele anhand der Figuren näher erläutert.

Es zeigt
- Fig.1: einen schematischen Ablauf einer Bildaufnahme zur Lumineszenzmikroskopie; und
- Fig.2: einen schematischen Ablauf einer Bildaufnahme zur Lumineszenzmikroskopie mit synchroner Positionsgenerierung.

Die Bezugszeichen und deren Bedeutung sind zusammengefasst in der Bezugszeichenliste. Im allgemeinen bezeichnen dieselben Bezugszeichen dieselben Teile.

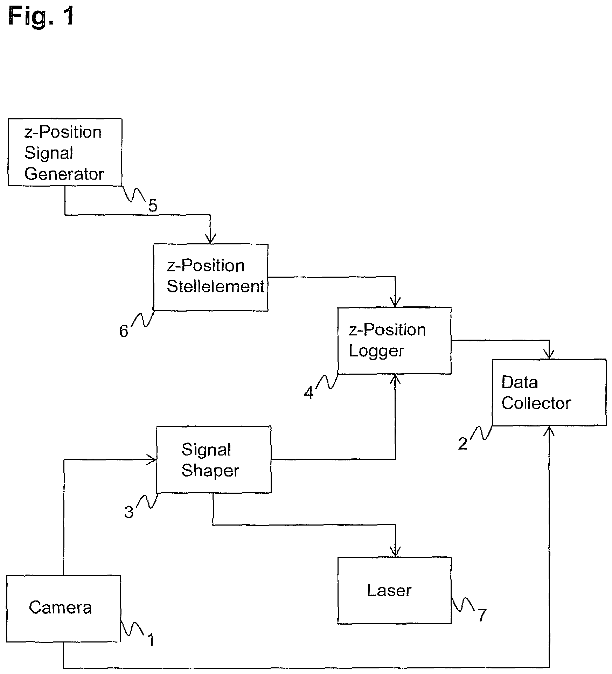

Figur 1 zeigt in einer schematischen Darstellung den Ablauf einer Bildaufnahme zur Lumineszenzmikroskopie. Nach dem Anregen einer Teilmenge der in der Probe vorhandenen Markierungsmoleküle zur Abgabe von Lumineszenzstrahlung bildet ein optisches Aufnahmegerät 1 die Markierungsmoleküle in einem Fangbereich ab und überträgt Daten der Abbildung an eine Bildfangschaltung 2. Das Aufnahmegerät 1 ist dabei beispielsweise in einem free-run Modus, wobei die Bildaufnahme von dem Aufnahmegerät 1 festgelegt wird.

Das Aufnahmegerät 1 überträgt einen Zeitpunkt der Abbildung an einen Signalformer 3 als Auslösezeitpunkt. Im Anschluss wird der Auslösezeitpunkt an den Datenaufnehmer 4 übertragen. Der Datenaufnehmer 4 bestimmt mittels des Auslösesignals die Position der Probe zum Zeitpunkt des Abbildens der Markierungsmoleküle und überträgt die Position an die Bildfangschaltung 2. Die Daten der Abbildung werden von der Bildfangschaltung 2 mit der Position der Probe zum Auslösezeitpunkt zusammengeführt und ergeben damit einen sogenannten Frame oder eine Bildaufnahme einer Schicht. Nach dem Abschluss der Messung werden diese Frames oder Schichten zu einem drei dimensionalen Schichtbild der Probe zusammengeführt.

Die Positionierung der Probe in Tiefenrichtung oder z- Richtung in Bezug auf ein Objektiv des optischen Aufnahmegeräts 1 erfolgt durch Generieren eines Signals zur Vorgabe einer vertikalen Position der Probe mittels eines Signalgenerators 5. Dies geschieht im Normalfall einmal vor der Messung der Probe, kann allerdings auch während der Messung erfolgen und beliebig oft wiederholt werden. Während der Messung wird nach jeder Schicht eine neue Position entsprechend des Signals angesteuert. Ein Stellelement 6 beispielsweise ein Piezoelektrisches Stellelement steuert dabei die vertikale Position der Probe an. Ferner wird die Position der Probe bevorzugt in der Auslesezeit des Aufnahmegeräts 1 durch das Stellelement 6 angesteuert. Das Stellelement überträgt dabei die Position der Probe zum Zeitpunkt des Abbildens der Markierungsmoleküle an den Datenaufnehmer 4. Die Position der Probe zum Zeitpunkt des Abbildens der Markierungsmoleküle kann dabei auch zusätzlich oder ausschliesslich vom Signalgenerator 5 als ein Soll-Signal in analoger oder digitaler Form an den Datenaufnehmer 4 übermittelt werden.

Das Stellelement 6 steuert eine beliebige Positionsfolge beispielsweise in einer z-Signalform an. Dabei kann eine beliebige Signalform gewählt werden, beispielsweise periodisch oder stochastisch. Weiter kann die Positionierung der Probe durch das Stellelement 6 kontinuierlich erfolgen. Das Stellelement kann zusätzlich einen internen Positionssensor aufweisen um ein Ist-Signal der Position der Probe in analoger oder digitaler Form zu generieren und zusätzlich oder ausschliesslich an den Datenaufnehmer 4 zu übermitteln.

Darüber hinaus kann das Auslösesignal des Aufnahmegeräts 1 als Kontrollsignal zur Anregung und/oder Aktivierung der Markierungsmoleküle verwendet werden um beispielsweise ein Ausblenden oder Blanking eines Beleuchtungsstrahlengangs eines Lasers 7 zu steuern. Dieses Ausblenden ist unter Anderem nötig um unnötiges Bleichen der Probe zu vermeiden. Bei dem Bleichen der Probe werden Markierungsmoleküle oberhalb und unterhalb des Bildbereichs angeregt oder aktiviert. Dadurch stehen diese Markierungsmoleküle für eine weitere Bildaufnahme in einer höheren oder tieferen Schicht nicht mehr zur Verfügung. Bei dem Ausblenden oder Blanking des Lasers 7 wird das Lasersignal ausgeblendet sobald das Abbilden einer Schicht erfolgt ist und der Verarbeitungsprozess der aktuellen Daten und ein Positionierprozess für die nächste Schicht läuft.

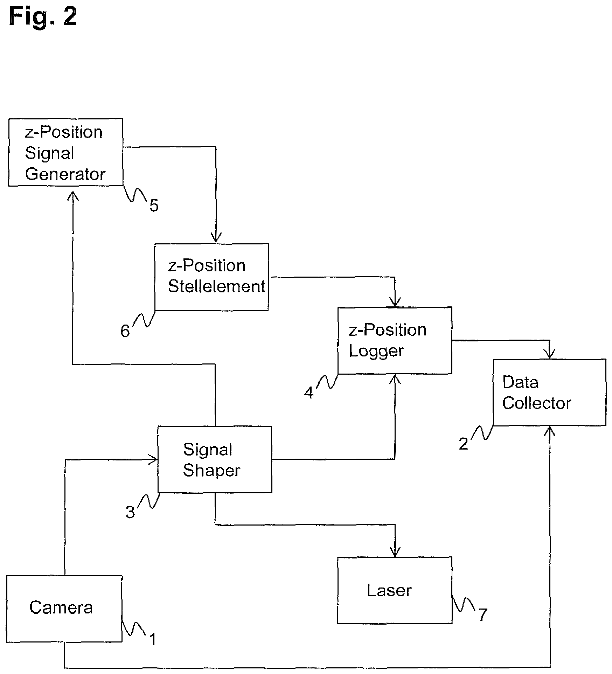

Figur 2 beschreibt ein Verfahren zur synchronen Positionsgenerierung. Dabei läuft das Verfahren wie in Figur 1 ab mit dem Unterschied, dass die Positionierung der Probe in Tiefenrichtung vom Signalformer 3 ausgelöst wird. Damit erfolgt die Positionierung synchron zur Bildaufnahme des Aufnahmegeräts 1 beispielsweise dadurch, dass eine vordefinierte Liste von Positionen angefahren wird.

### Liste der Bezugszeichen

- 1: Aufnahmegerät
- 2: Bildfangschaltung
- 3: Signalformer
- 4: Datenaufnehmer
- 5: Signalgenerators
- 6: Stellelement
- 7: Laser

## Patentansprüche

1. Verfahren zur hochauflösenden Lumineszenzmikroskopie einer mit Markierungsmolekülen markierten Probe, wobei die Markierungsmoleküle zur Abgabe von Lumineszenzstrahlung anregbar sind, und wobei eine Bildaufnahme folgende Schritte aufweist:
a) Anregen einer Teilmenge der in der Probe vorhandenen Markierungsmoleküle zur Abgabe von Lumineszenzstrahlung mittels eines quer zur Tiefenrichtung liegenden Lichtblatts oder mittels zweier sich in Tiefenrichtung überlappender Lichtblätter;
b) Abbilden der Markierungsmoleküle in einem Fangbereich mittels eines optischen Aufnahmegeräts (1) und Übertragen eines Zeitpunkts des Abbildens der Markierungsmoleküle als Auslösezeitpunkt des optischen Aufnahmegeräts (1) an einen Signalformer (3), wobei der Auslösezeitpunkt durch das Aufnahmegerät (1) übertragen wird;
c) Übertragen der Abbildung an eine Bildfangschaltung (2);
d) Übertragen des Auslösezeitpunkts an einen Datenaufnehmer (4);
e) Übertragen einer Position der Probe in einer Tiefenrichtung in Bezug auf ein Objektiv des optischen Aufnahmegeräts (1) an den Datenaufnehmer (4); und
f) Bestimmen der Position der Probe zum Zeitpunkt des Abbildens der Markierungsmoleküle mittels des Auslösezeitpunkts durch den Datenaufnehmer (4) und Übertragen der Position an die Bildfangschaltung (2), welche die Abbildung mit der Position zusammenführt.

2. Verfahren zur hochauflösenden Lumineszenzmikroskopie nach Anspruch 1, wobei eine Positionierung der Probe in Tiefenrichtung in Bezug auf ein Objektiv des optischen Aufnahmegeräts (1) folgende Schritte aufweist:
Generieren eines Signals zur Vorgabe einer vertikalen Position der Probe mittels eines Signalgenerators (5); und
Ansteuern einer Position der Probe in Bezug auf das Objektiv.

3. Verfahren zur hochauflösenden Lumineszenzmikroskopie nach einem der Ansprüche 1 oder 2, wobei die Markierungsmoleküle derart aktivierbar sind, dass sie erst nach erfolgter Aktivierung zur Abgabe von Lumineszenzstrahlung anregbar sind, und wobei eine Bildaufnahme weiter folgenden Schritt aufweist:
Aktivieren einer Teilmenge der in der Probe vorhandenen Markierungsmoleküle zur Abgabe von Lumineszenzstrahlung.

4. Verfahren zur hochauflösenden Lumineszenzmikroskopie nach einem der Ansprüche 1, 2 oder 3, wobei der Signalformer (3) ein Steuersignal an den Signalgenerator (5) zum Anfahren einer Position in Tiefenrichtung gibt, synchronisiert mit dem Abbilden der Markierungsmoleküle.

5. Verfahren zur hochauflösenden Lumineszenzmikroskopie nach einem der Ansprüche 1 bis 4, wobei ein Lokalisieren der Markierungsmoleküle erfolgt, eine Messung der Probe eine Vielzahl von Bildaufnahmen und Positionierungen aufweist und die Bildaufnahmen in Verbindung mit der Position der Probe zu einem Schichtbild zusammengefügt werden.

6. Verfahren zur hochauflösenden Lumineszenzmikroskopie nach einem der Ansprüche 1 bis 5, wobei der Auslösezeitpunkt als Kontrollsignal zur Anregung und/oder Aktivierung der Markierungsmoleküle verwendet wird, zu einem Ausblenden eines Beleuchtungsstrahlengangs.

7. Verfahren zur hochauflösenden Lumineszenzmikroskopie nach Anspruch 6, wobei das Ausblenden des Beleuchtungsstrahlengangs während einer Auslesezeit des optischen Aufnahmegeräts (1) erfolgt.

8. Verfahren zur hochauflösenden Lumineszenzmikroskopie nach einem der Ansprüche 1 bis 7, wobei ein Stellelement (6) die vertikale Position der Probe ansteuert und die Position der Probe zum Zeitpunkt des Abbildens der Markierungsmoleküle an den Datenaufnehmer (4) überträgt.

9. Verfahren zur hochauflösenden Lumineszenzmikroskopie nach Anspruch 8, wobei das Ansteuern einer Position der Probe während einer Auslesezeit des optischen Aufnahmegeräts (1) erfolgt.

10. Verfahren zur hochauflösenden Lumineszenzmikroskopie nach Anspruch 8, wobei das Stellelement (6) die Probe oder das Objektiv des optischen Aufnahmegeräts (1) positioniert.

11. Verfahren zur hochauflösenden Lumineszenzmikroskopie nach einem der Ansprüche 7 bis 10, wobei das Stellelement (6) eine beliebige Positionsfolge ansteuert und die Positionierung kontinuierlich erfolgt.
